# EUROPÄISCHE PATENTANMELDUNG

(11) **EP 4 342 639 A1**
(43) Veröffentlichungstag der Anmeldung: **27.03.2024**
(21) Anmeldenummer: 22197482.7
(22) Anmeldetag: 23.09.2022
(51) Int. Cl.: B25F 5/02

(54) **LAGERVORRICHTUNG FÜR EIN AKKUMULATORMODUL AN EINEM HANDWERKZEUG**

(71) Anmelder: C. & E. Fein GmbH, 73529 Schwäbisch-Gmünd-Bargau (DE)
(72) Erfinder: JUSTINSKI, Klaus, 73579 Schechingen (DE); KLABUNDE, Olaf, 89537 Giengen/Brenz (DE)
(74) Vertreter: Wallinger, Michael

(57) **Zusammenfassung**

Eine Lagervorrichtung (10) zur Lagerung eines Akkumulatormoduls (20) an einer Schnittstelle eines Maschinengehäuseabschnitts (30) eines Handwerkzeugs (100) und eines korrespondierenden Akkumulatorgehäuseabschnitts (22) des Akkumulatormoduls (20), aufweisend mindestens ein Lagerelement (1), das ausgebildet ist, das Akkumulatormodul (20) in einer Verbindungsposition, in der das Akkumulatormodul (20) mit dem Handwerkzeug (100) in elektrischer Verbindung steht, verliersicher zu lagern, und das Überführen des Akkumulatormoduls (20) aus der Verbindungsposition in eine Entnahmeposition zu ermöglichen, in der das Akkumulatormodul (20) von dem Handwerkzeug (100) entfernbar ist, dadurch gekennzeichnet, dass das mindestens ein Lagerelement (1) ein Polymer aufweist und in der Verbindungsposition zwischen dem Maschinengehäuseabschnitt (30) und dem Akkumulatorgehäuseabschnitt (22) angeordnet ist, um den Maschinengehäuseabschnitt (30) und den Akkumulatorgehäuseabschnitt (22) zu lagern.

## Beschreibung

Die vorliegende Erfindung bezieht sich auf eine Lagervorrichtung zur Lagerung eines Akkumulatormoduls an einer Schnittstelle eines Maschinengehäuseabschnitts eines Handwerkzeugs und eines korrespondierenden Akkumulatorgehäuseabschnitts des Akkumulatormoduls, einen Maschinengehäuseabschnitt mit einer derartigen Lagervorrichtung, einen Akkumulatorgehäuseabschnitt mit einer derartigen Lagervorrichtung und ein Handwerkzeug mit einer derartigen Lagervorrichtung, insbesondere ein Handwerkzeug mit einer oszillierenden Antriebsbewegung.

Bei akkubetriebenen Elektrowerkzeugen mit im Betrieb auftretenden Vibrationen, insbesondere wenn die Bewegung des Werkzeugs auf einer oszillierenden Bewegung basiert, kann das Akkumulatormodul mit der Maschine an den Kontaktstellen aufgrund der durch Reibung erzeugten Wärme verschweißen. Dabei ist die Qualität der Oberflächen der Kontaktstellen entscheidend. Je sauberer die Oberflächen, desto schneller entsteht eine ungewollte Kunststoffschweißverbindung zwischen den Gehäusen der Werkzeugmaschine und des Akkumulatormoduls. Dies hat zur Folge, dass das Akkumulatormodul nicht mehr, beziehungsweise nur durch Aufbringen hoher Kräfte, und unter Umständen nicht zerstörungsfrei, entfernt werden kann. Materialbeschädigung und -ermüdung sind zudem die Folge.

Eine Möglichkeit zu Vermeidung der Kunststoffverschweißung besteht darin, das Akkumulatormodul an den mit dem Maschinegehäuse korrespondierenden Bereichen zu wachsen. Hierbei wird mit einer Vorrichtung Wachs auf die Führung und die Kontaktstellen der Akkuschnittstelle am Akkumulatormodul aufgetragen, um diese bewusst zu verunreinigen. Es hat sich gezeigt, dass diese Maßnahme eine wirksame Möglichkeit ist, welcher aber nur von kurzer Dauer ist, da sich das Wachs verflüchtigt. Abhängig vom Einsatz im Betrieb des Handwerkzeugs ist nicht sichergestellt, dass die Kontaktflächen dauerhaft mit dem Wachs benetzt bleiben. Deshalb kann dem Entstehen einer stoffschlüssigen Verbindung durch Wachsen der Kontaktflächen nur kurzfristig vorgebeugt werden.

Eine andere Möglichkeit wurde darin gesehen, Metallklammern einzusetzen und ein erhöhtes Spiel in der Führung zwischen Akkumulatormodul und Maschinengehäuse vorzusehen. Die Metallklammern wurden in einem Bereich angeordnet, in dem eine Drückerrastnase des Akkumulatormoduls bei eingeschobenem Akkumulatormodul eingreift. Die Metallklammer bildete an dieser Stelle eine gegenüber dem die Metallklammer umgebenden Kunststoff stabilere Reibungsfläche. Es wurde dabei aber festgestellt, dass die Kunststoff-Drückerrastnase aufgrund der Vibration im Betrieb an der Kante der Metallklammer auf Dauer beschädigt wurde, und in Folge dessen das Akkumulatormodul nicht mehr zuverlässig entriegelt werden kann.

Ausgehend von den bekannten Vorrichtungen des Stands der Technik besteht die Aufgabe der Erfindung darin, einem stoffschlüssigen Verbinden zwischen Maschinengehäuse und Akkumulatormodulgehäuse bei einem oszillierend angetriebenen Handwerkzeug vorzubeugen.

Diese Aufgabe wird gelöst durch eine Lagervorrichtung gemäß der unabhängigen Ansprüche, insbesondere durch einen damit versehenen Maschinengehäuseabschnitt gemäß Anspruch oder Akkumulatorgehäuseabschnitt gemäß Anspruch. Bevorzugte optionale Ausgestaltungen der Erfindung sind Gegenstände der Unteransprüche und lassen sich der nachfolgenden Beschreibung und den Figuren sowie deren Beschreibung entnehmen.

Die Lagervorrichtung dient der Lagerung eines Akkumulatormoduls an einer Schnittstelle eines Maschinengehäuseabschnitts eines Handwerkzeugs und eines korrespondierenden Akkumulatorgehäuseabschnitts des Akkumulatormoduls. Die Lagervorrichtung weist dabei mindestens ein Lagerelement auf, das ausgebildet ist, das Akkumulatormodul in einer Verbindungsposition, in der das Akkumulatormodul mit dem Handwerkzeug in elektrischer Verbindung steht, verliersicher zu lagern.

Ferner ermöglicht das Lagerelement das Überführen des Akkumulatormoduls aus der Verbindungsposition in eine Entnahmeposition, in der das Akkumulatormodul von dem Handwerkzeug entfernbar ist. Das mindestens eine Lagerelement weist ein Polymer auf und ist in der Verbindungsposition zwischen dem Maschinengehäuseabschnitt und dem Akkumulatorgehäuseabschnitt angeordnet, um den Maschinengehäuseabschnitt und den Akkumulatorgehäuseabschnitt zu lagern. Die Lagervorrichtung ermöglicht eine indirekte Lagerung des Akkumulatorgehäuseabschnitts am Maschinengehäuseabschnitt, welche das Risiko eines Verschweißens der beiden mittelbar aneinander gelagerten Abschnitte reduziert.

Unter einer Lagervorrichtung im Sinne der Erfindung ist dabei eine Vorrichtung zu verstehen, die funktional ausgebildet ist, eine Komponente zu lagern und deren Bewegung in der Verbindungsposition in einigen Freiheitsgraden, vorzugsweise in allen Freiheitsgraden, reversibel einzuschränken. Diese in der Verbindungsposition gelagerte Komponente ist insbesondere der Akkumulatorgehäuseabschnitt. Es kann die Lagervorrichtung fest mit dem Maschinengehäuseabschnitt verbunden sein oder mit dem Akkumulatorgehäuseabschnitt.

Die Lagervorrichtung kann dabei in Form einer einteiligen, vorzugsweise einer zweiteiligen, oder einer mehrteiligen Vorrichtung vorliegen. Diese mehreren Teile können miteinander verbunden sein und/oder können sich in der Verbindungsposition, in der das Akkumulatormodul mit dem Handwerkzeug in elektrischer Verbindung steht, berühren. Ferner kann die Lagervorrichtung auch in Form mehrerer baulich nicht zusammenhängender, aber zum Zweck der Lagerung zusammenwirkender Komponenten, vorzugsweise unter Verwirklichung einer in Verbindungsposition verwirklichten Mehrpunktlagerung, insbesondere Dreipunktlagerung oder Vierpunktlagerung, vorliegen. In solchen Fällen ist es möglich, dass in der Verbindungsposition weitere Lagerungspunkte bestehen, die nicht durch die Lagervorrichtung gebildet werden; vorzugsweise wird die Lagerung des Akkumulatorgehäuseabschnitts am Maschinengehäuseabschnitt im Falle der Mehrpunktlagerung -und in allen weiteren Fällen- aber ausschließlich durch die Lagervorrichtung gebildet. Punktlager in diesem Sinne lassen sich insbesondere durch als Sockelelemente ausgebildete Lagerelemente bilden. Diese Sockelelemente können Aufnahmebereiche zur Aufnahme, insbesondere formschlüssigen Aufnahme, von Eingriffsbereichen aufweisen. Diese Eingriffsbereiche sind dann insbesondere am Maschinengehäuseabschnitt ausgebildet. Diese Sockelelemente können umgekehrt auch Eingriffsbereichen zum Eingriff, insbesondere formschlüssigen Eingriff, in Aufnahmebereiche aufweisen. Diese Aufnahmebereiche sind dann insbesondere am Maschinengehäuseabschnitt ausgebildet.

Vorzugsweise sind der Maschinengehäuseabschnitt und der Akkumulatorgehäuseabschnitt zumindest teilweise, insbesondere vollständig, beabstandet gelagert. Die vollständig beabstandete Lagerung führt dazu, dass sich der Maschinengehäuseabschnitt und der Akkumulatorgehäuseabschnitt in der Verbindungsposition nicht berühren. Bei der teilweise beabstandeten Lagerung wird in Kauf genommen, dass sich der Maschinengehäuseabschnitt und der Akkumulatorgehäuseabschnitt abschnittsweise berühren, insbesondere an solchen Abschnitten, an denen in der Praxis das Problem des Verschweißens nicht auftritt oder vernachlässigbar ist. Durch die Beabstandung kommt es in der Verbindungsposition zu einem geringen, vorzugsweise keinem, Kontakt zwischen Akkumulatorgehäuseabschnitt und Maschinengehäuseabschnitt. Dadurch wird das durch die Oszillation induzierte aneinander Reiben der beiden Abschnitte reduziert, vorzugsweise ganz vermieden, und die Ursache der Wärmeentwicklung gehemmt. In Folge dessen wird einer unerwünschten Kunststoffschweißverbindung vorgebeugt.

Vorzugsweise weist mindestens ein Lagerelement, vorzugsweise weisen zwei Lagerelemente jeweils, zumindest abschnittsweise oder im Wesentlichen eine längliche Form auf. Dadurch wird die Umsetzung einer Führungsfunktion ermöglicht.

Unter einem Akkumulatormodul im Sinne der Erfindung ist ein wiederaufladbares Speicherelement zum Speichern und definierten Abgeben elektrischer Energie zu verstehen. Die elektrische Energie dient dabei vorzugsweise dem Antreiben des Handwerkzeugs.

Unter einer elektrischen Verbindung ist dabei eine Verbindung, vorzugsweise in Form einer elektrischen Leitung, oder mehrerer sich leitfähig kontaktierender elektrischer Leitungen beziehungsweise elektrisch leitenden Kontakten, oder in Form eines stromleitenden Kabels, zum Leiten elektrischen Stroms zu verstehen.

Unter einer Verbindungsposition im Sinne der Erfindung ist eine Position zu verstehen, in der das Akkumulatormodul mit dem Handwerkzeug in elektrischer Verbindung steht, und das Akkumulatormodul an dem Handwerkzeug über die Lagervorrichtung verliersicher gelagert ist.

Unter einer Entnahmeposition im Sinne der Erfindung ist eine Position zu verstehen, in der das Akkumulatormodul von dem Handwerkzeug entfernbar ist, in der insbesondere das Akkumulatormodul nicht mehr mit dem Handwerkzeug verbunden ist, insbesondere nicht mehr verliersicher verbunden ist. In der Entnahmeposition liegt vorzugsweise keine elektrische Verbindung zwischen Akkumulatormodul und Handwerkzeug vor.

Unter einer verliersicheren Lagerung im Sinne der Erfindung ist eine Lagerung zu verstehen, in welcher die Bewegung eines zu lagernden Teils, insbesondere des Akkumulatormoduls bzw. des Akkumulatorgehäuseabschnitts, in allen Freiheitsgraden eingeschränkt und/oder im Wesentlichen bzw. unter Tolerieren eines Spiels zwischen den Teilen, unterbunden ist.

Unter einem Maschinengehäuseabschnitt im Sinne der Erfindung ist ein Gehäuseabschnitt des Handwerkzeugs zu verstehen. Vorzugsweise ist der Maschinengehäuseabschnitt einstückig, zweistückig oder mehrteilig ausgestaltet. Das Maschinengehäuse eines Handwerkzeugs umhüllt insbesondere einen Elektromotor des Handwerkzeugs, der insbesondere eine Werkzeugspindel des Handwerkzeugs antreibt, mit der ein Werkzeug verbindbar ist bzw. verbunden ist. Als Stromquelle dient das Akkumulatormodul. Der Maschinengehäuseabschnitt kann auch das gesamte Maschinengehäuse bilden.

Unter einem Akkumulatorgehäuseabschnitt im Sinne der Erfindung ist ein Gehäuseabschnitt des Akkumulatormoduls zu verstehen. Vorzugsweise ist der Akkumulatorgehäuseabschnitt einstückig, zweistückig oder mehrteilig ausgestaltet. Der Akkumulatorgehäuseabschnitt kann auch das gesamte Akkumulatorgehäuse bilden.

Vorteilhaft ist das mindestens eine Lagerelement ausgebildet, dass es innerhalb mindestens einer Ausnehmung des Maschinengehäuseabschnitts anordenbar ist.

Vorteilhaft ist das mindestens eine Lagerelement in der Verbindungsposition innerhalb mindestens einer Ausnehmung des Maschinengehäuseabschnitts angeordnet, insbesondere verliersicher angeordnet, insbesondere spielfrei angeordnet. Die mindestens eine Ausnehmung ist ausgestaltet, den Akkumulatorgehäuseabschnitt zumindest teilweise, insbesondere vollständig aufzunehmen.

Unter einer Ausnehmung des Maschinengehäuseabschnitts im Sinne der Erfindung ist ein Raum beziehungsweise eine Vertiefung innerhalb des Maschinengehäuseabschnitts und/oder ein vom Maschinengehäuseabschnitt zumindest teilweise umgrenzter bzw. abgeschirmter Raum zu verstehen. Die Ausnehmung kann verschiedene Bereiche umfassen. Ein erster Bereich dient der Aufnahme mindestens eines Teils des Akkumulatorgehäuseabschnitts. In einem zweiten Bereich der Ausnehmung kann das Lagerelement angeordnet sein. Die Ausnehmung beziehungsweise deren erster und zweiter Bereich ist derart dimensioniert, dass der Akkumulatorgehäuseabschnitt in der Verbindungsposition von dem Maschinengehäuseabschnitt beabstandet ist. Dadurch wird ein direkter, oder jedenfalls ein reduzierter Kontakt zwischen Akkumulatorgehäuseabschnitt und Maschinengehäuseabschnitt vermieden, wodurch einer ungewollten Kunststoffverschweißung vorgebeugt wird.

Unter einem Polymer wird in herkömmlicher Weise ein chemischer Stoff verstanden, der aus Makromolekülen besteht. Die Makromoleküle sind aus einer oder mehreren Struktureinheiten, sogenannten konstitutionellen Repetiereinheiten oder Wiederholeinheiten, aufgebaut. Die Einteilung der Polymerwerkstoffe erfolgt nach DIN 7724 aufgrund des Temperaturverlaufes des Schubmoduls und des Zugverformungsrestes bei Raumtemperatur. Sie beruht auf dem mechanischen Verhalten im Gebrauchstemperaturbereich und der Existenz eines Schmelzbereiches und ist unter anderem in Duroplaste, Elastomere, Thermoplaste und thermoplastische Elastomere unterteilt.

Vorteilhaft ist das Polymer des mindestens einen Lagerelements, auch bezeichnet als erstes Polymer, ein teilkristalliner, insbesondere hochmolekularer, Kunststoff, vorzugsweise ein thermoplastischer Kunststoff. Das erste Polymer weist vorzugsweise einen Kristallisationsgrad von über 60% oder 70% auf, vorzugsweise kleiner gleich 80%, 85% oder 90%, wobei der Kristallisationsgrad vorzugsweise durch Dichtemessung bestimmt wird. Das erste Polymer ist vorzugsweise Polyoxymethylen (POM). Auch Polytetrafluorethylen (PTFE) ist bevorzugt.

Thermoplastische Kunststoffe sind Kunststoffe, die sich in einem bestimmten Temperaturbereich verformen lassen. Dieser Vorgang ist reversibel, das heißt, er kann durch Abkühlung und Wiedererwärmung bis in den schmelzflüssigen Zustand beliebig oft wiederholt werden, solange nicht durch Überhitzung die sogenannte thermische Zersetzung des Materials einsetzt. Darin unterscheiden sich Thermoplaste von den Duroplasten und Elastomeren.

Unter einem Kristallisationsgrad im Sinne der Erfindung ist jener Anteil eines teilkristallinen Feststoffes zu verstehen, der kristallin ist. Bei Polymeren hängt der Kristallisationsgrad unter anderem von der thermischen Vergangenheit des Materials ab.

Das Ausmaß der Kristallisation eines teilkristallinen Polymers ist von den Bedingungen abhängig, bei denen das Polymer fest wird und erstarrt. Einen entscheidenden Einfluss haben dabei die Temperatur während des Erstarrens und die Geschwindigkeit der Temperaturänderung. Bei der Kristallisation im Kunststoff erhöhen sich dessen Dichte, die Glastemperatur, die Schmelztemperatur und die Festigkeit. Das hat zur Folge, dass sich auch die Formstabilität und der Widerstand gegen mechanischen Verschleiß verbessern. Gleichzeitig nehmen der thermische Ausdehnungskoeffizient und das Eindringvermögen von Flüssigkeiten und Gasen ab.

Die gängigsten Methoden zur Bestimmung des Kristallisationsgrades bei Polymeren sind die Dichtemessung, DSC, Röntgenbeugung, IR-Spektroskopie oder NMR. Neben den oben genannten integralen Methoden kann die Verteilung von kristallinen und amorphen Bereichen über mikroskopische Verfahren, speziell Polarisationsmikroskopie und Transmissionselektronenmikroskopie, visualisiert werden.

Polyoxymethylene (POM) sind teilkristalline Polymere, die insbesondere zur Herstellung von Formteilen im Spritzgussverfahren verwendet werden. POM zeichnet sich durch hohe Festigkeit, Härte und Steifigkeit in einem weiten Temperaturbereich aus. Es behält seine hohe Zähigkeit, weist eine hohe Abriebfestigkeit, einen niedrigen Reibungskoeffizienten, eine hohe Wärmeformbeständigkeit, gute Gleiteigenschaften, gute elektrische und dielektrische Eigenschaften sowie eine geringe Wasseraufnahme auf. Wegen der hohen Steifigkeit, niedrigen Reibwerten und guter Dimensionsstabilitäten werden Polyoxymethylene für die Herstellung von Präzisionsteilen eingesetzt. Die niedrigen Reibwerte sind dahingehend vorteilhaft, als dass die durch die Oszillation induzierte Reibungswärme reduziert wird, wodurch einer unerwünschten Kunststoffverschweißung vorgebeugt wird. Ähnliches gilt für andere geeignete Materialien, z.B. PTFE.

Vorteilhaft ist das mindestens eine Lagerelement ein Führungsleistenelement, das dazu ausgebildet ist, das Akkumulatormodul zwischen der Verbindungsposition und der Entnahmeposition entlang einer, insbesondere linearen, Führungsrichtung zu führen.

Unter einem Führungsleistenelement im Sinne der Erfindung ist ein Teil zu verstehen, das funktional ausgebildet ist, den Akkumulatorgehäuseabschnitt an dem Maschinengehäuseabschnitt zwischen der Verbindungsposition und der Entnahmeposition zu führen und vorzugsweise den Akkumulatorgehäuseabschnitt und den Maschinengehäuseabschnitt voneinander zu beabstanden, um in der Verbindungsposition einer unerwünschten Kunststoffverschweißung der beiden Abschnitte vorzubeugen.

Ein Führungsleistenelement weist vorzugsweise eine langgestreckte Form auf und/oder weist mindestens einen Abschnitt auf, der eine langgestreckte Form aufweist. Langgestreckt (synonym: "länglich") bedeutet insbesondere linear verlaufend und bedeutet insbesondere, dass die Länge des Teils dessen Breite und/oder Höhe jeweils übertrifft, insbesondere mehrfach übertrifft. Ein solcher Führungsabschnitt weist vorzugsweis mindestens eine linear verlaufende Fläche auf, die insbesondere als Gleitfläche dienen kann. Anstelle eines linearen Verlaufs kommt aber auch ein, insbesondere abschnittsweise oder im Ganzen, gekrümmt verlaufender, insbesondere kreisförmig gekrümmter, Führungsabschnitt in Betracht. Ein Führungsleistenelement kann mehr als eine Gleitfläche aufweisen, die insbesondere in einem Winkel zueinander angeordnet sein können und/oder sich parallel gegenüber liegen, insbesondere um eine Nut zu bilden. Der Querschnitt eines Führungsabschnitts kann insbesondere im Wesentlichen L-förmig sein, oder im Wesentlichen U-förmig. Ein Nut-förmiger Abschnitt kann der Befestigung der Lagervorrichtung am Maschinengehäuseabschnitt oder Akkumulatorgehäuseabschnitt dienen, kann aber auch der beweglichen Aufnahme eines beweglich am Maschinengehäuseabschnitt gelagerten Akkumulatorgehäuseabschnitts dienen oder der beweglichen Aufnahme eines beweglich am Akkumulatorgehäuseabschnitt gelagerten Maschinengehäuseabschnitts dienen.

Das mindestens eine Lagerelement kann aber auch teilweise oder im Wesentlichen plattenförmig ausgestaltet sein, und kann insbesondere eine Platte mit integrierten Führungsabschnitten aufweisen, die der relativen Bewegung des Maschinengehäuseabschnitts und des Akkumulatorgehäuseabschnitts dienen.

Vorteilhaft ist die Lagervorrichtung mehrteilig, insbesondere zweiteilig ausgestaltet. Vorteilhaft weist die Lagervorrichtung zwei oder mehr Lagerelemente auf, oder die Lagervorrichtung ist einstückig gefertigt. Die Lagervorrichtung kann auch in Form mehrerer nicht zusammenhängender Komponenten, vorzugsweise zur Erzielung einer Mehrpunktlagerung, vorliegen.

Vorteilhaft ist das mindestens eine Lagerelement, insbesondere als Führungsleistenelement, zumindest teilweise, insbesondere vollständig ausgebildet, dass es entlang mindestens einer Hinterschneidung zumindest einer Seitenfläche des mindestens einen ersten Bereichs der Ausnehmung des Maschinengehäuseabschnitts anordenbar ist. Insofern die Lagervorrichtung mit dem Maschinen- bzw. Akkumulatorgehäuseabschnitt verbunden ist, ist das mindestens eine Lagerelement, insbesondere als Führungsleistenelement, zumindest teilweise, insbesondere vollständig entlang mindestens einer Hinterschneidung zumindest einer Seitenfläche des mindestens einen ersten Bereichs der Ausnehmung des Maschinen- bzw. Akkumulatorgehäuseabschnitts angeordnet.

Unter einer Hinterschneidung im Sinne der Erfindung ist ein Bereich zu verstehen, der an einem Gehäuseabschnitt derart angeordnet ist, dass ein darin angeordnetes Teil zumindest teilweise durch das Gehäuse bedeckt ist. Insbesondere ist ein in einer Hinterschneidung angeordnetes Teil bei einem Sturz durch das Gehäuse geschützt.

Vorteilhaft umfasst das mindestens eine Lagerelement eine Vertiefung und/oder eine Aussparung zur Aufnahme eines Rastelements, insbesondere einer an dem Akkumulatormodul angebrachten Drückerrastnase. Die Verbindungsposition ist insbesondere jene Position, in der der Maschinengehäuseabschnitt und der Akkumulatorgehäuseabschnitt durch Verrasten des Rastelements miteinander verbunden sind.

Die Erfindung ist auch gerichtet auf einen Maschinengehäuseabschnitt eines Handwerkzeugs umfassend eine erfindungsgemäße Lagervorrichtung, die vorzugsweise verliersicher und/oder unbeweglich mit dem Maschinengehäuseabschnitt verbunden ist, insbesondere formschlüssig und/oder stoffschlüssig und/oder kraftschlüssig verbunden ist. Das mindestens eine Lagerelement ist vorzugsweise innerhalb eines ersten Bereichs einer Ausnehmung, vorteilhaft in einer Hinterschneidung innerhalb der Ausnehmung, des Maschinengehäuseabschnitts verliersicher, insbesondere formschlüssig und/oder stoffschlüssig und/oder kraftschlüssig, gehalten. Die Lagervorrichtung kann auch an den Maschinengehäuseabschnitt angespritzt sein, insbesondere durch Mehrkomponentenspritzgießen, insbesondere Overmolding.

Demnach betrifft die Erfindung auch einen Maschinengehäuseabschnitt eines Handwerkzeugs, aufweisend
- eine Schnittstelle zur lösbaren Verbindung eines korrespondieren Akkumulatorgehäuseabschnitts bzw. Akkumulatormoduls mit dem Maschinengehäuseabschnitt,
- eine Lagervorrichtung zur Lagerung des Akkumulatorgehäuseabschnitts bzw. Akkumulatormoduls an der Schnittstelle, wobei die Lagervorrichtung insbesondere verliersicher mit dem Maschinengehäuseabschnitt verbunden ist,
wobei die Lagervorrichtung mindestens ein Lagerelement aufweist, das ausgebildet ist, den Akkumulatorgehäuseabschnitt bzw. das Akkumulatormodul in einer Verbindungsposition, in der insbesondere das Akkumulatormodul mit dem Handwerkzeug in elektrischer Verbindung steht, verliersicher zu lagern, und das Überführen des Akkumulatorgehäuseabschnitts bzw. Akkumulatormoduls aus der Verbindungsposition in eine Entnahmeposition zu ermöglichen, in der der Akkumulatorgehäuseabschnitt bzw. das Akkumulatormodul von dem Maschinengehäuseabschnitt bzw. dem Handwerkzeug entfernbar ist, dadurch gekennzeichnet, dass das mindestens ein Lagerelement ein Polymer aufweist und in der Verbindungsposition zwischen dem Maschinengehäuseabschnitt und dem Akkumulatorgehäuseabschnitt angeordnet ist, um den Akkumulatorgehäuseabschnitt mittelbar an dem Maschinengehäuseabschnitt zu lagern, und insbesondere zumindest teilweise, insbesondere vollständig, beabstandet aneinander zu lagern.

Unter formschlüssigen Verbindungen im Sinne der Erfindung sind Verbindungen zu verstehen, die durch das Ineinandergreifen von mindestens zwei Verbindungspartnern entstehen. Dadurch können sich die Verbindungspartner auch im Falle einer gemischt formschlüssig/kraftschlüssigen Verbindung ohne oder bei unterbrochener Kraftübertragung nicht lösen, indem mindestens ein Freiheitgrad der Bewegung durch diese Verbindung eingeschränkt wird, vorzugsweise zwei oder mehr Freiheitsgrade oder alle Freiheitsgrade.

Unter einer stoffschlüssigen Verbindung im Sinne der Erfindung sind Verbindungen zu verstehen, bei denen die Verbindungspartner durch atomare oder molekulare Kräfte zusammengehalten werden. Sie sind gleichzeitig nicht lösbare Verbindungen, die sich nur durch Zerstörung der Verbindungsmittel trennen lassen. Eine stoffschlüssige Verbindung kann insbesondere durch Schweißen oder Kleben erzeugt werden.

Ferner ist auch eine kraftschlüssige Verbindung des mindestens einen Lagerelements mit dem Maschinengehäuseabschnitt oder dem Akkumulatorgehäuseabschnitt denkbar.

Vorteilhaft weist der Maschinengehäuseabschnitt ein zweites Polymer und der Akkumulatorgehäuseabschnitt ein drittes Polymer auf oder besteht im Wesentlichen daraus, das insbesondere aus der Gruppe der Polyamide stammt, und vorzugsweise PA6 ist. PA6 hat typischerweise einen Kristallisationsgrad von 30-40%. Das zweite Polymer und das dritte Polymer können identisch oder verschieden sein. Vorzugsweise weist das zweite beziehungsweise dritte Polymer einen Kristallisationsgrad von unter 50% auf. Das zweite beziehungsweise dritte Polymer ist vorzugsweise ein anderes Polymer als das erste Polymer, mit dem das mindestens eine Lagerelement gebildet ist. Durch die Unterschiedlichkeit der Werkstoffe wird bereits das Risiko des Verschweißens der beweglich aneinander gelagerten Teile reduziert.

Unter einem Polyamid im Sinne der Erfindung sind lineare Polymere mit sich regelmäßig wiederholenden Amidbindungen entlang der Hauptkette zu verstehen. Die Amidgruppe kann als Kondensationsprodukt einer Carbonsäure und eines Amins aufgefasst werden. Die dabei entstehende Bindung ist eine Amidbindung, die hydrolytisch wieder spaltbar ist.

PA6 oder Polycaprolactam ist ein Polymer aus der Gruppe der Polyamide. Der Kunststoff wird auf Grund der Zähigkeit und Verschleißfestigkeit im Maschinenbau unter anderem für belastete Komponenten sowie wegen der guten Gleiteigenschaften für hoch belastete Gleitlager und -platten verwendet. Bei einer Werkstoffpaarung zweier Komponenten aus PA6, wie auch anderer gleicher Polymerpaare, kann es bei oszillierender Relativbewegung zu einer unerwünschten Verbindung, beispielsweise aufgrund einer Kunststoffverschweißung, kommen.

In einer besonders bevorzugten Ausführungsform wird vorgeschlagen, dass Maschinengehäuseabschnitt und Akkumulatorgehäuseabschnitt mit dem Lagerelement jeweils eine Werkstoffpaarung aufweisen, deren Neigung zu einem Verschweißen aufgrund der Materialeigenschaften reduziert ist.

Vorteilhaft ist das mindestens eine Lagerelement ausgebildet, dass es in der Verbindungsposition ein Rastelement, insbesondere eine Drückerrastnase, des Akkumulatormoduls derart bedeckt bzw. aufnimmt, dass zwischen dem Rastelement des Akkumulatormoduls und dem Maschinengehäuseabschnitt keine Berührung beziehungsweise kein Kontakt möglich ist.

Unter einem Rastelement im Sinne der Erfindung ist ein Teil zu verstehen, das funktional ausgebildet ist, ein Einrasten des Akkumulatormoduls an dem Maschinengehäuse und eine damit einhergehende verliersichere Positionierung zu ermöglichen. Ein Rastelement ist typischerweise beweglich und gefedert gelagert. Ferner bietet das Rastelement eine reversible Lagerung und ist vom Anwender bewegbar, wodurch beispielsweise ein Wechseln des Akkumulatormoduls ermöglicht wird.

Die Erfindung ist auch gerichtet auf einen Akkumulatorgehäuseabschnitt eines Akkumulatormoduls für ein Handwerkzeug, umfassend eine erfindungsgemäße Lagervorrichtung. Das mindestens eine Lagerelement an dem Akkumulatorgehäuseabschnitt ist verliersicher, insbesondere formschlüssig und/oder stoffschlüssig und/oder kraftschlüssig, gehalten, analog wie im Falle der Anordnung am Maschinengehäuseabschnitt.

Die Erfindung ist auch gerichtet auf ein Handwerkzeug, insbesondere ein Handwerkzeug mit einer oszillierenden Antriebsbewegung, umfassend eine erfindungsgemäße Lagervorrichtung, und einen Maschinengehäuseabschnitt, und/oder ein Akkumulatormodul umfassend einen Akkumulatorgehäuseabschnitt.

Der Maschinengehäuseabschnitt und der Akkumulatorgehäuseabschnitt in der Verbindungsposition sind über die erfindungsgemäße Lagervorrichtung gelagert, insbesondere teilweise, insbesondere vollständig, voneinander beabstandet.

Hierbei kann mindestens eine Lagervorrichtung entweder am Maschinengehäuseabschnitt oder am Akkumulatorgehäuseabschnitt oder an beiden dieser Abschnitte angebracht sein.

Demnach betrifft die Erfindung auch ein Handwerkzeug, aufweisend
- einen Maschinengehäuseabschnitt,
- einen Akkumulatorgehäuseabschnitt oder ein Akkumulatormodul mit diesem Akkumulatorgehäuseabschnitt,
- eine Schnittstelle zur lösbaren Verbindung des korrespondieren Akkumulatorgehäuseabschnitts bzw. Akkumulatormoduls mit dem Maschinengehäuseabschnitt,
- eine Lagervorrichtung zur Lagerung des Akkumulatorgehäuseabschnitts bzw. Akkumulatormoduls an der Schnittstelle, wobei die Lagervorrichtung verliersicher mit dem Maschinengehäuseabschnitt verbunden ist,

wobei der Akkumulatorgehäuseabschnitt in einer Verbindungsposition angeordnet ist, in der insbesondere das Akkumulatormodul mit dem Handwerkzeug in elektrischer Verbindung steht, insbesondere lösbar und verliersicher mit dem Maschinengehäuseabschnitt verbunden ist und an der Lagervorrichtung gelagert ist,
wobei die Lagervorrichtung mindestens ein Lagerelement aufweist, welches den Akkumulatorgehäuseabschnitt bzw. das Akkumulatormodul in der Verbindungsposition verliersicher lagert und welches das Überführen des Akkumulatorgehäuseabschnitts bzw. Akkumulatormoduls aus der Verbindungsposition in eine Entnahmeposition ermöglicht, in welcher der Akkumulatorgehäuseabschnitt bzw. das Akkumulatormodul von dem Maschinengehäuseabschnitt bzw. dem Handwerkzeug entfernbar ist, dadurch gekennzeichnet, dass das mindestens ein Lagerelement ein Polymer aufweist und in der Verbindungsposition zwischen dem Maschinengehäuseabschnitt und dem Akkumulatorgehäuseabschnitt angeordnet ist, um den Akkumulatorgehäuseabschnitt mittelbar an dem Maschinengehäuseabschnitt zu lagern, und insbesondere zumindest teilweise, insbesondere vollständig, beabstandet aneinander zu lagern.

Insbesondere kann das Handwerkzeug mit zwei Lagervorrichtungen versehen sein, von denen insbesondere eine erste Lagervorrichtung fest mit dem Maschinengehäuseabschnitt verbunden sein kann und eine zweite Lagervorrichtung fest mit dem Akkumulatorgehäuseabschnitt verbunden sein kann, wobei sich vorzugsweise die erste und die zweite Lagervorrichtung in der Verbindungsposition aneinander abstützen. Die erste und die zweite Lagervorrichtung können in der Verbindungsposition in Kontakt stehen.

In einer anderen bevorzugten Ausführungsform stehen die erste und die zweite Lagervorrichtung in der Verbindungsposition nicht in Kontakt. Vorzugsweise sind die erste und die zweite Lagervorrichtung in der Verbindungsposition versetzt zueinander angeordnet, liegen sich demnach nicht direkt gegenüber.

Die Erfindung ist auch gerichtet auf ein Verfahren zur Herstellung der Lagervorrichtung, aufweisend zumindest die Schritte:
* Bereitstellen eines ersten Polymers;
* Herstellen des mindestens einen Lagerelements durch Spritzgießen aus dem ersten Polymer, insbesondere mit einem Kristallisationsgrad von über 60% oder über 70%.

Die Erfindung ist auch gerichtet auf ein Verfahren zur Herstellung eines mit einer erfindungsgemäßen Lagervorrichtung versehenen Maschinengehäuseabschnitts, aufweisend zumindest die Schritte:
* Bereitstellen der Lagervorrichtung;
* Verbinden der Lagervorrichtung mit dem Maschinengehäuseabschnitt, insbesondere durch Formschluss und/oder Stoffschluss und/oder Kraftschluss. Die Lagervorrichtung kann dabei auch an den Maschinengehäuseabschnitt angespritzt werden, insbesondere durch Mehrkomponentenspritzgießen, insbesondere Overmolding.

Die Erfindung ist auch gerichtet auf ein Verfahren zur Herstellung eines mit einer erfindungsgemäßen Lagervorrichtung versehenen Akkumulatorgehäuseabschnitts, aufweisend zumindest die Schritte:
* Bereitstellen der Lagervorrichtung;
* Verbinden der Lagervorrichtung mit dem Akkumulatorgehäuseabschnitt, insbesondere durch Formschluss und/oder Stoffschluss und/oder Kraftschluss. Die Lagervorrichtung kann dabei auch an den Akkumulatorgehäuseabschnitt angespritzt werden, insbesondere durch Mehrkomponentenspritzgießen, insbesondere Overmolding.

Weitere Vorteile, bevorzugte Ausgestaltungen und Anwendungsmöglichkeiten der vorliegenden Erfindung ergeben sich aus der nachfolgenden Beschreibung in Zusammenhang mit den Figuren. Es zeigt:
Fig. 1 zeigt eine perspektivische Ansicht eines Handwerkzeugs mit einer erfindungsgemäßen Lagervorrichtung gemäß Ausführungsbeispiel, hier gezeigt ohne Akkumulatormodul;
Fig. 2 zeigt eine perspektivische Ansicht eines Akkumulatormoduls und ausschnittsweise die Lagervorrichtung der Figur 1;
Fig. 3 zeigt eine weitere perspektivische Ansicht mit der Lagervorrichtung aus Figur 1 und 2;
Fig. 4 zeigt eine perspektivische Ansicht des Handwerkzeugs umfassend die Lagervorrichtung aus Fig. 1, Fig. 2 und Fig. 3, mit Akkumulatormodul in der Verbindungsposition; und
Fig. 5 zeigt ein Flussdiagramm eines erfindungsgemäßen Verfahrens.

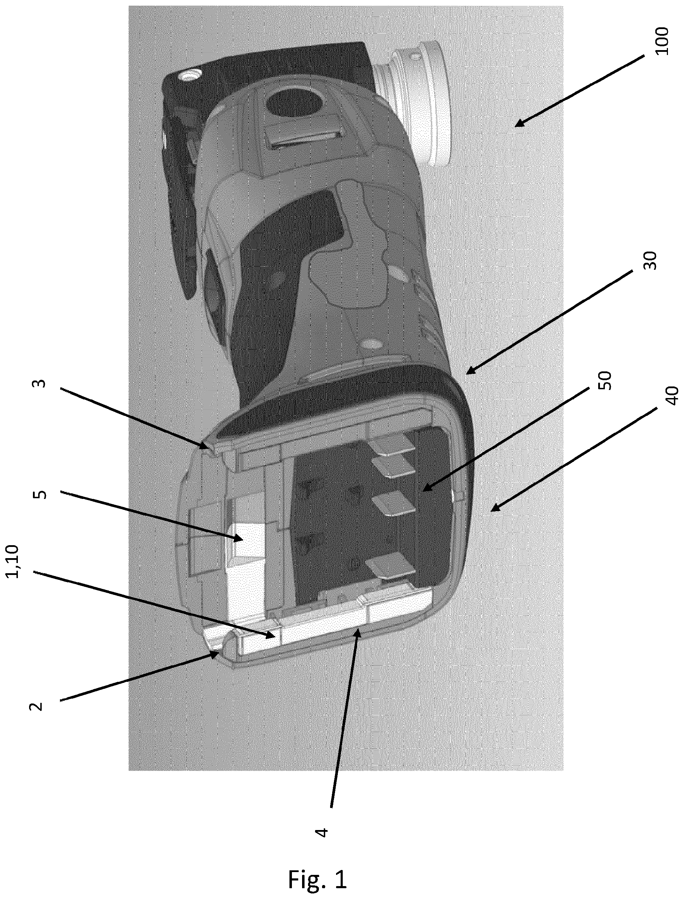

**Fig. 1** zeigt ein Handwerkzeug 100, hier ein Multifunktionswerkzeug mit oszillierend angetriebener Werkzeugspindel, mit einer erfindungsgemäßen Lagervorrichtung 10 zur Lagerung eines Akkumulatormoduls 20 (hier nicht gezeigt) an einer Schnittstelle 40 eines Maschinengehäuseabschnitts 30 des Handwerkzeugs 100 und eines korrespondierenden Akkumulatorgehäuseabschnitts 22 (hier nicht gezeigt) des Akkumulatormoduls 20. Die Lagervorrichtung 10 umfasst ein Lagerelement 1, das ausgebildet ist, das Akkumulatormodul 20 in einer Verbindungsposition, in der das Akkumulatormodul 20 mit dem Handwerkzeug 100 in elektrischer Verbindung steht, verliersicher zu lagern, und das Überführen des Akkumulatormoduls 20 aus der Verbindungsposition in eine Entnahmeposition zu ermöglichen, in der das Akkumulatormodul 20 von dem Handwerkzeug 100 entfernbar ist. Der Werkstoff des Lagerelements 1 umfasst ein erstes Polymer, hier POM, und ist in der Verbindungsposition zwischen dem Maschinengehäuseabschnitt 30 und dem Akkumulatorgehäuseabschnitt 22 angeordnet, um den Maschinengehäuseabschnitt 30 und den Akkumulatorgehäuseabschnitt 22 zumindest teilweise, insbesondere vollständig, beabstandet aneinander zu lagern.

Der Maschinengehäuseabschnitt 30 und der Akkumulatorgehäuseabschnitt 22 sind aus einem anderen Material als die Lagervorrichtung gefertigt, wodurch das Risiko des Verschweißens reduziert ist.. Im Ausführungsbeispiel wird für das andere Material PA6 verwendet. Die bei der Anwendung des Handwerkzeugs vorhandene oszillierende Bewegung und in deren Folge entstehende Reibung und Wärme erzeugt bei der Materialpaarung POM/PA6 keine nachteilige Wirkung, insbesondere beugt diese Materialpaarung einem Verschweißen vor. Die Lagervorrichtung kann deshalb auch dauerhaft mit dem Maschinengehäuseabschnitt 30 verbunden sein.

Das mindestens eine Lagerelement 1 weist eine Vertiefung 5 zur Aufnahme eines Rastelements 6, insbesondere einer an dem Akkumulatormodul 20 angebrachten Drückerrastnase, auf. Das Lagerelement 1 hat dabei die Funktion eines Führungsleistenelements, das ausgebildet ist, zumindest teilweise, insbesondere vollständig, entlang mindestens eines ersten Bereichs 2 einer Aussparung 50 des Maschinengehäuseabschnitts 30 angeordnet zu sein. Der erster Bereich 2 dient der Aufnahme mindestens eines Teils des Akkumulatorgehäuseabschnitts 22. In einem zweiten Bereich ist das Lagerelement 1 angeordnet. Der erste und zweite Bereich ist derart dimensioniert, dass der Akkumulatorgehäuseabschnitt 22 in der Verbindungsposition von dem Maschinengehäuseabschnitt 30 beabstandet ist. Dadurch wird ein direkter, oder jedenfalls ein reduzierter Kontakt zwischen Akkumulatorgehäuseabschnitt 22 und Maschinengehäuseabschnitt 30 vermieden, wodurch einer ungewollten Kunststoffverschweißung vorgebeugt wird. Dabei kann der erste Bereich 2 der Aussparung 50 in Form einer Nut und/oder einer Hinterschneidung 3 gebildet sein, in dem das Lagerelement 1 mit zumindest einer Seitenfläche 4 vorzugsweise formschlüssig angeordnet ist.

Der erste Bereich 2 der Aussparung 50 ist derart dimensioniert, dass der Akkumulatorgehäuseabschnitt 22 durch das in dem ersten Bereich 2 der Aussparung 50 angeordnete Lagerelement 1 von dem Maschinengehäuseabschnitt 30 beabstandet ist. Somit besteht kein direkter Kontakt zwischen Akkumulatorgehäuseabschnitt 22 zu Maschinengehäuseabschnitt 33, wodurch einer ungewollten Kunststoffverschweißung der beiden Abschnitte vorgebeugt wird. Ferner dient der erste Bereich 2 der Aussparung 50 und insbesondere die darin angeordnete Hinterschneidung 3 dem Schutz des Lagerelements 1 vor mechanischen Einflüssen, wie sie beispielsweise bei einem Herabfallen des Handwerkzeugs 100 auftreten können.

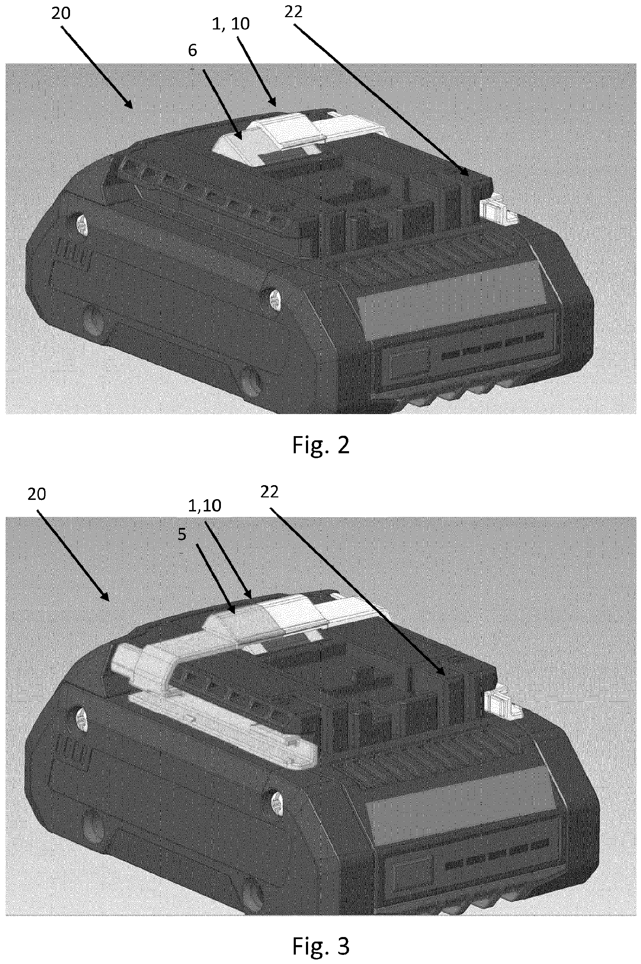

**Fig. 2** zeigt einen Teil eines zweistückigen Lagerelements 1, das ausgebildet ist, innerhalb mindestens des ersten Bereichs 2 der Aussparung 50 des Maschinengehäuseabschnitts 30 anordenbar zu sein, wobei die mindestens eine Aussparung 50 ausgestaltet ist, den Akkumulatorgehäuseabschnitt 22 zumindest teilweise, insbesondere vollständig aufzunehmen. Das mindestens eine Lagerelement 1 ist dabei als ein Führungsleistenelement ausgestaltet, das dazu ausgebildet ist, das Akkumulatormodul 20 zwischen der Verbindungsposition und der Entnahmeposition entlang einer Führungsrichtung zu führen. Die Lagervorrichtung 10 ist zweiteilig ausgestaltet, wobei nur ein Teil gezeigt ist. Dies dient der vereinfachten Montage der Lagervorrichtung 10 am Maschinengehäuseabschnitts 30. Grundsätzlich könnten die beiden Teile des Lagerelements 1 auch integral verbunden sein. Die beiden Teile, die sich berühren, wenn sie mit dem Gehäuseabschnitt verbunden sind, bilden durch ihr Zusammenwirken ein Lagerelement. Jedes dieser beiden Teile kann aber auch jeweils separat als Lagerelement 1 verstanden werden. Die Lagervorrichtung 10 kann dabei an dem Akkumulatorgehäuseabschnitt 22 oder an dem Maschinengehäuseabschnitt 30 angebracht sein.

Der Akkumulatorgehäuseabschnitt 22 besteht im Ausführungsbeispiel aus PA6, während das Lagerelement 1 im Ausführungsbeispiel aus Polyoxymethylenen, POM, besteht. Die niedrigen Reibwerte von POM sind dahingehend vorteilhaft, dass die Wirkung der durch die Oszillation entstehende Reibung und Wärme reduziert wird, wodurch einer Kunststoffverschweißung der Lagervorrichtung 10 mit dem Akkumulatorgehäuseabschnitt 22 vorgebeugt wird.

Das Lagerelement 1 ist als Führungsleistenelement ausgeführt, das dazu ausgebildet ist, das Akkumulatormodul 20 zwischen der Verbindungsposition und der Entnahmeposition entlang einer Führungsrichtung zu führen. Hierfür weist das Führungsleistenelement 1 zwei Führungsabschnitte in länglicher Form auf, an deren linearer Gleitfläche eine lineare Führung stattfindet.

**Fig. 3** zeigt beide Teile des zweistückigen Lagerelements 1 aus Fig. 1. Das Lagerelement 1 bzw. Führungsleistenelement ist vollständig, entlang der Hinterschneidungen 3 zumindest einer Seitenfläche 4 des mindestens einen ersten Bereichs 2 der Aussparung 50 des Maschinengehäuseabschnitts 30 angeordnet. Das Lagerelement 1 weist eine Vertiefung 5 zur Aufnahme eines Rastelements 6, insbesondere einer an dem Akkumulatormodul 20 angebrachten Drückerrastnase, auf.

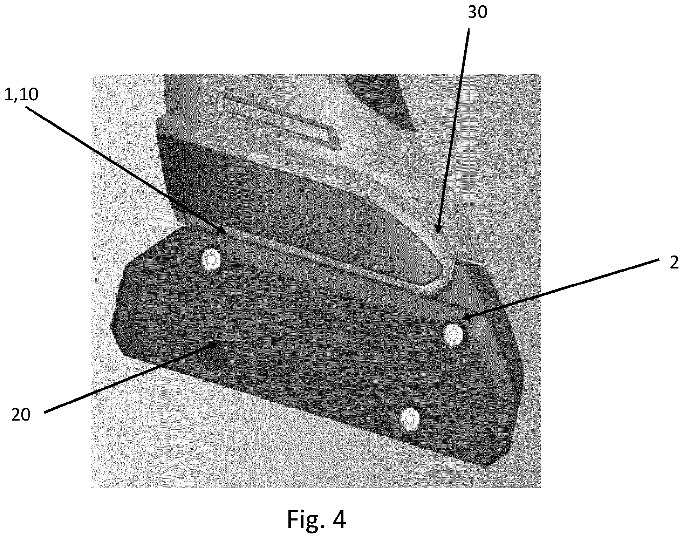

**Fig. 4** zeigt ein Handwerkzeug 100, insbesondere ein Handwerkzeug mit einer oszillierenden Antriebsbewegung. Das Handwerkzeug umfasst eine Lagervorrichtung 10 mit einem Lagerelement 1, einen Maschinengehäuseabschnitt 30 und ein Akkumulatormodul 20 umfassend einen Akkumulatorgehäuseabschnitt 22. Durch das Lagerelement 1 sind Maschinengehäuseabschnitt 30 und Akkumulatorgehäuseabschnitt 22 voneinander beabstandet, wodurch bei einer oszillierenden Antriebsbewegung einer unerwünschten Kunststoffverschweißung vorgebeugt wird, indem der Kontakt von Akkumulatorgehäuseabschnitt 22 und Maschinengehäuseabschnitt 30 durch das Lagerelement 1 verhindert wird.

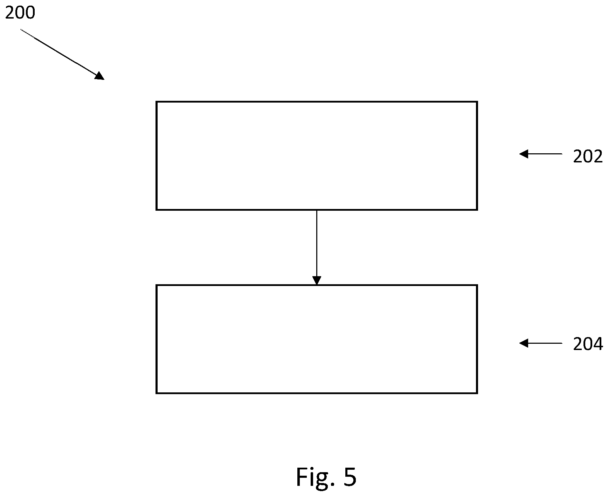

**Fig. 5** zeigt ein Flussdiagramm eines Verfahrens 200 zur Herstellung der Lagervorrichtung 10, aufweisend zumindest die Schritte:
* Bereitstellen 202 eines ersten Polymers;
* Herstellen 204 des mindestens einen Lagerelements durch Spritzgießen aus dem ersten Polymer, insbesondere mit einem Kristallisationsgrad von über 60%.

Das erste Polymer liegt dabei vorzugsweise in Form von Kunststoffgranulat vor. Nach der Polymerisierung und ggf. Compoundierung liegt das erste Polymer im Extruder zunächst als Schmelze vor. Diese wird nun über Düsen zu Strängen geformt und in Luft oder Wasser abgekühlt. Anschließend schneidet ein rotierendes Messer die Stränge in wenige Millimeter lange Abschnitte welche als Granulat bezeichnet werden.

Beim Spritzgießen wird mit einer Spritzgießmaschine das erste Polymer verflüssigt (plastifiziert) und in eine Form, dem Spritzgießwerkzeug, unter Druck eingespritzt. Im Werkzeug geht das erste Polymer durch Abkühlung oder eine Vernetzungsreaktion wieder in den festen Zustand über und wird nach dem Öffnen des Werkzeuges als Fertigteil entnommen. Der Hohlraum, die Kavität, des Werkzeuges bestimmt dabei die Form und die Oberflächenstruktur eines Lagerelements 1 einer Lagervorrichtung 10.

### Bezugszeichenliste

- 1: Lagerelement
- 2: erster Bereich von 50
- 3: Hinterschneidung
- 4: Seitenfläche
- 5: Vertiefung
- 6: Rastelement
- 10: Lagervorrichtung
- 20: Akkumulatormodul
- 22: Akkumulatorgehäuseabschnitt
- 30: Maschinengehäuseabschnitt
- 40: Schnittstelle
- 50: Aussparung
- 100: Handwerkzeug
- 200: Verfahren zur Herstellung der Lagervorrichtung
- 202: Bereitstellen
- 204: Herstellen

## Patentansprüche

1. Lagervorrichtung (10) zur Lagerung eines Akkumulatormoduls (20) an einer Schnittstelle (40) eines Maschinengehäuseabschnitts (30) eines Handwerkzeugs (100) und eines korrespondierenden Akkumulatorgehäuseabschnitts (22) des Akkumulatormoduls (20), aufweisend mindestens ein Lagerelement (1), das ausgebildet ist, das Akkumulatormodul (20) in einer Verbindungsposition, in der das Akkumulatormodul (20) mit dem Handwerkzeug (100) in elektrischer Verbindung steht, verliersicher zu lagern, und das Überführen des Akkumulatormoduls (20) aus der Verbindungsposition in eine Entnahmeposition zu ermöglichen, in der das Akkumulatormodul (20) von dem Handwerkzeug (100) entfernbar ist,
**dadurch gekennzeichnet, dass**
das mindestens ein Lagerelement (1) ein Polymer aufweist und in der Verbindungsposition zwischen dem Maschinengehäuseabschnitt (30) und dem Akkumulatorgehäuseabschnitt (22) angeordnet ist, um den Maschinengehäuseabschnitt (30) und/oder den Akkumulatorgehäuseabschnitt (22) zu lagern.

2. Lagervorrichtung (10) gemäß Anspruch 1,
**dadurch gekennzeichnet, dass** das Lagerelement (1) ausgebildet ist, den Maschinengehäuseabschnitt (30) und/oder den Akkumulatorgehäuseabschnitt (22) zumindest teilweise, insbesondere vollständig, beabstandet aneinander zu lagern.

3. Lagervorrichtung (10) gemäß einem der vorangehenden Ansprüche,
**dadurch gekennzeichnet, dass** das mindestens eine Lagerelement (1) ausgebildet ist, innerhalb mindestens eines ersten Bereichs (2) einer Aussparung (50) des Maschinengehäuseabschnitts (30) anordenbar ist, wobei die mindestens eine Aussparung (50) einen zweiten Bereich umfasst, in dem der Akkumulatorgehäuseabschnitt (22) zumindest teilweise, insbesondere vollständig aufgenommen ist.

4. Lagervorrichtung (10) gemäß einem der vorangehenden Ansprüche,
**dadurch gekennzeichnet, dass** das erste Polymer ein teilkristalliner hochmolekularer thermoplastischer Kunststoff ist, insbesondere einen Kristallisationsgrad von über 70%, vorzugsweise Polyoxymethylene (POM).

5. Lagervorrichtung (10) gemäß einem der vorangehenden Ansprüche,
**dadurch gekennzeichnet, dass** die Lagervorrichtung (10) mehrteilig, insbesondere zweiteilig ausgestaltet ist, insbesondere zwei oder mehr Lagerelemente (1) aufweist, oder dass die Lagervorrichtung (10) einstückig gefertigt ist.

6. Lagervorrichtung (10) gemäß einem der vorangehenden Ansprüche,
**dadurch gekennzeichnet, dass** das mindestens eine Lagerelement (1), insbesondere ein Führungsleistenelement, ausgebildet ist, um zumindest teilweise, insbesondere vollständig, entlang mindestens einer Hinterschneidung (3) zumindest mit einer Seitenfläche (4) der mindestens einem ersten Bereich (2) der Aussparung (50) des Maschinengehäuseabschnitts (30) oder des Akkumulatorgehäuseabschnitts anordenbar zu sein.

7. Lagervorrichtung (10) gemäß einem der vorangehenden Ansprüche,
**dadurch gekennzeichnet, dass** das mindestens eine Lagerelement (1) eine Vertiefung (5) zur Aufnahme eines Rastelements (6), insbesondere einer an dem Akkumulatormodul (20) angebrachten Drückerrastnase, umfasst.

8. Maschinengehäuseabschnitt (30) eines Handwerkzeugs, umfassend eine Lagervorrichtung (10) gemäß einem der Ansprüche 1 bis 7,
**dadurch gekennzeichnet, dass** das mindestens eine Lagerelement (1) verliersicher mit dem Maschinengehäuseabschnitt verbunden ist, insbesondere formschlüssig und/oder stoffschlüssig und/oder kraftschlüssig verbunden ist, insbesondere innerhalb eines ersten Bereichs (2) einer Aussparung (50) des Maschinengehäuseabschnitts (30), angeordnet ist.

9. Maschinengehäuseabschnitt (30) nach Anspruch 8,
**dadurch gekennzeichnet, dass** der Maschinengehäuseabschnitt (30) ein vorzugsweise teilkristallines zweites Polymer, insbesondere mit einem Kristallisationsgrad von unter 50%, insbesondere aus der Gruppe der Polyamide, insbesondere Polycaprolactam, PA6, umfasst.

10. Maschinengehäuseabschnitt (30) nach Anspruch 8 oder 9,
**dadurch gekennzeichnet, dass** das mindestens eine Lagerelement (1) ausgebildet ist, ein Rastelement (6), insbesondere eine Drückerrastnase, des Akkumulatormoduls (20) derart zu bedecken, dass das Rastelement (6) des Akkumulatormoduls (20) keinen Kontakt zum Maschinengehäuseabschnitt (30) aufweist.

11. Akkumulatorgehäuseabschnitt (22) eines Akkumulatormoduls (20) für ein Handwerkzeug (100),
umfassend eine Lagervorrichtung (10) gemäß einem der Ansprüche 1 bis 7,
**dadurch gekennzeichnet, dass** das mindestens eine Lagerelement (1) mit dem Akkumulatorgehäuseabschnitt (22) verliersicher verbunden ist, insbesondere formschlüssig und/oder stoffschlüssig und/oder kraftschlüssig verbunden ist, insbesondere innerhalb eines ersten Bereichs (2) der Aussparung (50) des Akkumulatorgehäuseabschnitts angeordnet ist.

12. Akkumulatorgehäuseabschnitt (22) nach Anspruch 11,
**dadurch gekennzeichnet, dass** der Akkumulatorgehäuseabschnitt (22) ein vorzugsweise teilkristallines drittes Polymer, insbesondere mit einem Kristallisationsgrad von unter 50%, insbesondere aus der Gruppe der Polyamide, insbesondere Polycaprolactam, PA6, umfasst.

13. Akkumulatorgehäuseabschnitt (22) nach einem der Ansprüche 11 oder 12,
**dadurch gekennzeichnet, dass** das mindestens eine Lagerelement (1) ein Rastelement (6), insbesondere eine Drückerrastnase, des Akkumulatormoduls (20) derart bedeckt, dass das Rastelement (6) in einer Verbindungsposition, in der das Akkumulatormodul (20) mit dem Handwerkzeug (100) verbunden ist, keinen Kontakt zum Maschinengehäuseabschnitt (30) aufweist.

14. Handwerkzeug (100), insbesondere ein Handwerkzeug mit einer oszillierenden Antriebsbewegung,
umfassend eine Lagervorrichtung (10) gemäß einem der Ansprüche 1 bis 7, und
einen Maschinengehäuseabschnitt (30) gemäß einem der Ansprüche 8 bis 10, und/oder
ein Akkumulatormodul (20) umfassend einen Akkumulatorgehäuseabschnitt (22) gemäß einem der Ansprüche 11 bis 13,
**dadurch gekennzeichnet, dass** der Maschinengehäuseabschnitt (30) und der Akkumulatorgehäuseabschnitt (22) in der Verbindungsposition über die Lagervorrichtung (10) mittelbar aneinander gelagert sind, insbesondere teilweise oder vollständig, voneinander beabstandet sind.

15. Verfahren (200) zur Herstellung der Lagervorrichtung (10) gemäß einem der Ansprüche 1 bis 7, aufweisend zumindest die Schritte:
* Bereitstellen (202) eines Polymers;
* Herstellen (204) des mindestens einen Lagerelements durch Spritzgießen aus dem Polymer.
